# EUROPEAN PATENT APPLICATION

(11) **EP 4 667 985 A1**
(43) Date of publication of application: **24.12.2025**
(21) Application number: 24756980.9
(22) Date of filing: 15.02.2024
(51) Int. Cl.: G02B 6/02

(54) **MULTICORE FIBER**

(30) Priority: 17.02.2023 JP 2023023214
(71) Applicant: Fujikura Ltd., Tokyo 135-8512 (JP)
(72) Inventor: ODA, Takuya, Sakura-shi, Chiba 285-8550 (JP); TAKENAGA, Katsuhiro, Sakura-shi, Chiba 285-8550 (JP)
(74) Representative: Hoffmann Eitle
(86) International application number: PCT/JP2024/005383
(87) International publication number: WO 2024/172140

(57) **Abstract**

A transmission multicore fiber 10 includes a plurality of cores 11a to 11d and a cladding 12 surrounding each of the cores 11a to 11d, in which a propagation loss of measurement light having a wavelength other than a communication wavelength band is different between the core 11a and another core of the cores 11b to 11d.

## Description

### Technical Field

The present invention relates to a multicore fiber.

### Background Art

In order to achieve an increase in transmission capacity of an optical fiber communication device, it is known to transmit a plurality of signals by light propagating through each core using a multicore fiber in which an outer periphery of a plurality of cores as a waveguide is surrounded by one cladding. Patent Literature 1 below describes such a multicore fiber.

In the multicore fiber of Patent Literature 1 described below, a specific core and another core in a plurality of cores have different propagation losses. Therefore, alignment can be performed on the basis of a difference in propagation loss.

[Patent Literature 1] JP 2014-048645 A

### Summary of Invention

In optical communication, there is a demand for reducing variation in propagation loss of light propagating through each core. In response to this demand, it is conceivable to reduce a difference in propagation loss of light between a specific core and another core in the multicore fiber of Patent Literature 1. However, when the difference in propagation loss is reduced, it is difficult to identify a specific core.

Therefore, an object of the present invention is to provide a multicore fiber in which a specific core can be easily identified even when a variation in propagation loss of light having a wavelength of a communication wavelength band in the core is small.

A first aspect of the present invention is a multicore fiber including a plurality of cores and a cladding surrounding each of the cores, in which a propagation loss of measurement light having a wavelength other than a communication wavelength band is different between a specific core of the cores and another core of the cores.

In the first aspect, as described above, the propagation loss of the measurement light having the wavelength other than the communication wavelength band is different between the specific core and the another core. Therefore, according to the first aspect, even if the variation in the propagation loss of the light having the wavelength of the communication wavelength band in the core is small, the specific core can be easily identified by examining the propagation loss of each core using the measurement light in order to examine the specific core. Examples of a method for examining the propagation loss include measurement by an optical time domain reflectometer (OTDR), an optical frequency domain reflectometry (OFDR), an optical loss test set (OLTS), and the like. In particular, in the case of using the OTDR and the OFDR, the propagation loss can be examined only by causing light to enter from one end side of the multicore fiber, so that measurement can be easily implemented.

A second aspect of the present invention is the multicore fiber according to the first aspect, in which a difference between a propagation loss of the measurement light in the specific core and a propagation loss of the measurement light in the another core is 0.1 dB/km or more.

A difference in propagation loss between cores in a general multicore fiber tends to be less than 0.1 dB/km. Therefore, according to the second aspect, a specific core can be easily identified.

A third aspect of the present invention is the multicore fiber according to the first or second aspect, in which a wavelength of the measurement light is 1360 nm or more and less than 1460 nm.

In a case where the wavelength of light propagating through the core is 1360 nm or more and less than 1460 nm, which is a so-called E-band, it is known that the loss of light due to the hydroxyl group contained in the core increases, and it may be referred to as OH loss. According to the third aspect, by making the content of the hydroxyl group of the specific core larger than the contents of the hydroxyl groups of the other cores, the propagation loss of the measurement light in the specific core can be made larger than the propagation loss in the other cores. Therefore, the difference between the propagation loss of the measurement light in the specific core and the propagation loss of the measurement light in the other cores can be made larger than the difference between the propagation loss of the light having the wavelength of the communication wavelength band in the specific core and the propagation loss of the measurement light in the other cores.

A fourth aspect of the present invention is the multicore fiber according to any one of the first to third aspects, in which a wavelength of the measurement light is shorter than the communication wavelength band.

As the wavelength of light propagating through the core is shorter, inter-core crosstalk of the light tends to be suppressed. Therefore, according to the fourth aspect, as compared with the case where the communication wavelength band is the same and the wavelength of the measurement light is longer than the communication wavelength band, it is possible to suppress the inter-core crosstalk of the measurement light propagating through the core when examining the propagation loss of each core using the measurement light. Therefore, according to the fourth aspect, a specific core can be more easily identified.

A fifth aspect of the present invention is the multicore fiber according to any one of the first to fourth aspects, in which a difference between a propagation loss of the measurement light in the specific core and a propagation loss of the measurement light in the another core is larger than a difference between a propagation loss of light having a wavelength of the communication wavelength band in the specific core and a propagation loss of the light in the another core.

According to the fifth aspect, a specific core can be more easily identified.

A sixth aspect of the present invention is the multicore fiber according to any one of the first to fifth aspects, in which a wavelength of the measurement light is equal to or less than a wavelength at which light in a mode having an order higher by one order than a mode of light having a wavelength of the communication wavelength band propagating through the core is able to propagate.

With such a configuration, the measurement light propagated through the core includes light of the same mode as the mode of the light having the wavelength of the communication wavelength band propagated through the core and light of a mode having a higher order than the mode of the light. Light of a higher mode tends to leak out from the core through which the light propagates, and is easily affected by a propagation loss factor located at the outer peripheral portion of the core or outside the core. Examples of the propagation loss factor include an element that easily absorbs the measurement light added to the outer peripheral portion of the core or the periphery of the core in the cladding, unevenness of the boundary between the core and the cladding, a marker located near the core, and the like. Examples of the influence of the marker include the influence of impurities added to the marker, the influence of unevenness on the interface between the marker and the cladding, and the like. When the light of the higher mode leaked out from the core spreads to these propagation loss factors, the loss of the light of the higher mode increases due to the influence of these propagation loss factors. Therefore, according to the sixth aspect, for example, the propagation loss in the specific core of the light of the mode having a higher order than the mode of the light having the wavelength of the communication wavelength band is made larger than the propagation loss in the other cores by these propagation loss factors, so that the propagation loss in the specific core of the measurement light can be made larger than the propagation loss in the other cores. Therefore, the difference between the propagation loss of the measurement light in the specific core and the propagation loss of the measurement light in the other cores can be made larger than the difference between the propagation loss of the light having the wavelength of the communication wavelength band in the specific core and the propagation loss of the measurement light in the other cores.

A seventh aspect of the present invention is the multicore fiber according to any one of the first, second and fourth to sixth aspects, in which a wavelength of the measurement light is 800 nm or more and 950 nm or less.

The wavelength of light used in multi-mode fiber communication may be 800 nm or more and 950 nm or less, and there are existing OTDR and OLTS using light in the wavelength band. Thus, according to the seventh aspect, for example, the specific core can be identified by measuring the propagation loss by an existing OTDR or OLTS.

An eighth aspect of the present invention is the multicore fiber according to any one of the first, second, and fourth to sixth aspects, in which a wavelength of the measurement light is 360 nm or more and less than 830 nm.

Light having a wavelength of 360 nm or more and less than 830 nm is visible light, and the light appears dark as the energy decreases. Thus, according to the eighth aspect, for example, the specific core can be identified by visually checking the brightness of return light when the measurement light is caused to enter each of the cores from one end side of the multicore fiber.

A ninth aspect of the present invention is the multicore fiber according to any one of the first to eighth aspects, including a marker having a distance from the specific core smaller than a distance from the another core.

As light propagates through the core, some of the light seeps out of the core. As noted above, in the ninth aspect, the marker is closest to the specific core. Thus, the light leaking from the specific core is easily affected by the marker, and the loss of the measurement light propagating through the specific core can be made larger than the loss of the measurement light propagating through the other cores. Therefore, according to the ninth aspect, for example, even if the materials constituting the cores of the multicore fiber are the same, the propagation loss of the measurement light can be made different between a specific core and another core.

As described above, according to the present invention, there is provided a multicore fiber in which a specific core can be easily identified even when a variation in propagation loss of light having a wavelength of a communication wavelength band in the core is small.

### Brief Description of Drawings

[FIG. 1] FIG. 1 is a conceptual diagram illustrating an optical communication apparatus including a multicore fiber according to an embodiment of the present invention.
[FIG. 2] FIG. 2 is a view illustrating a cross section perpendicular to a longitudinal direction of a transmission multicore fiber illustrated in FIG. 1.
[FIG. 3] FIG. 3 is a view illustrating a cross section perpendicular to a longitudinal direction of a single-core fiber.
[FIG. 4] FIG. 4 is a diagram illustrating optical characteristics of the optical communication apparatus according to the present embodiment.
[FIG. 5] FIG. 5 is a view illustrating a cross section perpendicular to a longitudinal direction of a transmission multicore fiber according to a modification.

### Description of Embodiments

Hereinafter, a preferred embodiment of a multicore fiber according to the present invention will be described in detail with reference to the drawings. The embodiments exemplified below are intended to facilitate understanding of the present invention and are not intended to limit the present invention. The present invention can be modified and improved from the embodiments without departing from the gist thereof. Note that, for easy understanding, scales in the respective drawings may be different from scales described in the following description.

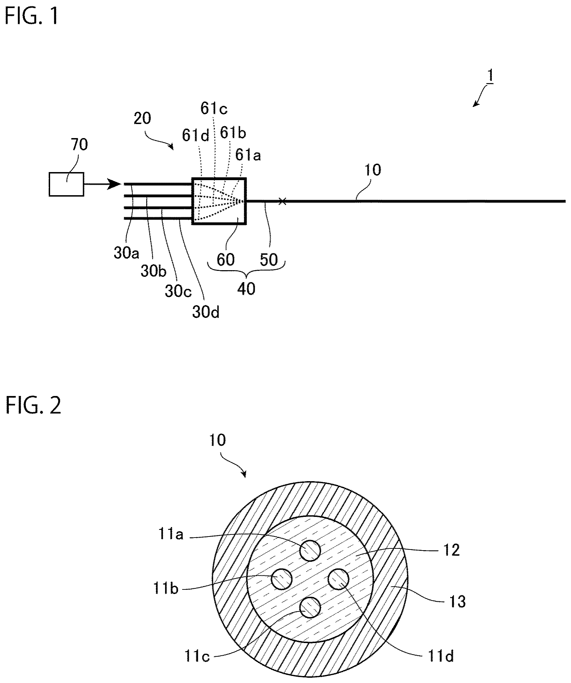

FIG. 1 is a conceptual diagram illustrating an optical communication apparatus including a multicore fiber according to the embodiment of the present invention. The multicore fiber of the present embodiment is a transmission multicore fiber 10, and the optical communication apparatus 1 mainly includes the transmission multicore fiber 10 and a fan-in/fan-out device 20.

FIG. 2 is a view illustrating a cross section perpendicular to a longitudinal direction of a transmission multicore fiber 10 illustrated in FIG. 1. The transmission multicore fiber 10 according to the present embodiment is a non-coupled multicore fiber, and includes four cores 11a to 11d, a cladding 12 that surrounds outer peripheral surfaces of the cores 11a to 11d with no gap, and a coating layer 13 that coats an outer peripheral surface of the cladding 12. Note that the number of cores may be plural and is not limited.

In the present embodiment, the outer shape in the cross section perpendicular to the longitudinal direction of the cladding 12 is substantially circular, and the cores 11a to 11d are disposed at positions that are substantially four times rotationally symmetric about the center of the cladding 12. Note that the arrangement of the cores is not limited.

The refractive index of each of the cores 11a to 11d is higher than the refractive index of the cladding 12, and in the present embodiment, relative refractive index differences of the cores 11a to 11d with respect to the cladding 12 are the same. Such cores 11a to 11d are made of, for example, silica glass to which a dopant such as germanium having a high refractive index is added, and the cladding 12 is made of, for example, silica glass to which no dopant is added. In addition, the cores 11a to 11d may be made of silica glass to which no dopant is added, and the cladding 12 may be made of silica glass to which a dopant such as fluorine having a low refractive index is added.

In the present embodiment, the content of the hydroxyl group of the core 11a is larger than the content of the hydroxyl groups of the cores 11b to 11d. As a method of making the number of hydroxyl groups of the core 11a larger than the number of hydroxyl groups of the cores 11b to 11d, for example, in the process of manufacturing a base material of the transmission multicore fiber 10, the time of a dehydration step of a core rod to be the core 11a is made shorter than the time of a dehydration step of core rods to be the cores 11b to 11d.

The coating layer 13 is made of a resin such as an ultraviolet curable resin.

Next, the fan-in/fan-out device 20 will be described. The fan-in/fan-out device may be referred to as a FIFO, and in the following, the fan-in/fan-out device 20 may be referred to as a FIFO 20.

The FIFO 20 of the present embodiment mainly includes four single-core fibers 30a to 30d and a waveguide member 40. Note that the number of single-core fibers 30a to 30d only needs to be the same as the number of cores 11a to 11d of the transmission multicore fiber 10, and changes according to the number of cores 11a to 11d.

Configurations of the single-core fibers 30a to 30d are the same as each other. Thus, hereinafter, the single-core fiber 30a will be described, and the other single-core fibers 30b to 30d are denoted by the same reference numerals and redundant description is omitted unless otherwise specified.

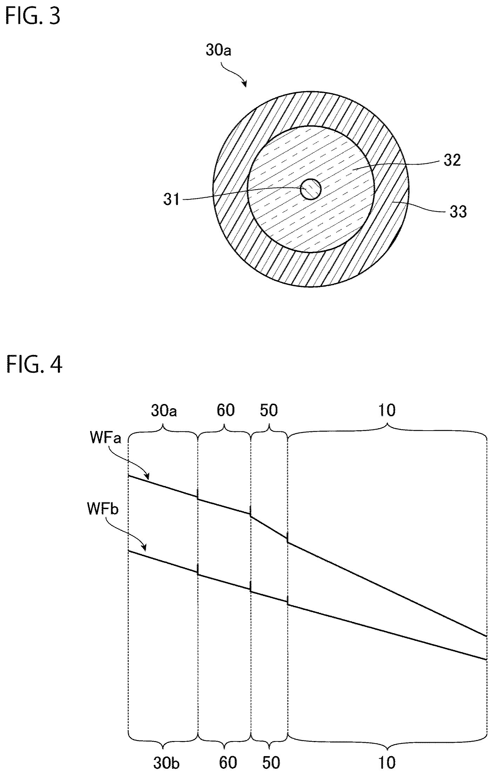

FIG. 3 is a view illustrating a cross section perpendicular to a longitudinal direction of the single-core fiber 30a. The single-core fiber 30a according to the present embodiment includes a core 31, a cladding 32 surrounding an outer peripheral surface of the core 31 with no gap, and a coating layer 33 coating an outer peripheral surface of the cladding 32.

In the present embodiment, the outer shape in the cross section perpendicular to the longitudinal direction of the cladding 32 is substantially circular, and the core 31 is disposed at the center of the cladding 32. The diameter of the core 31 is substantially the same as diameters of the cores 11a to 11d of the transmission multicore fiber 10.

The refractive index of the core 31 is higher than the refractive index of the cladding 32. Such a core 31 is made of, for example, silica glass to which a dopant having a high refractive index is added, and the cladding 32 is made of, for example, silica glass to which no dopant is added. In addition, the core 31 may be made of silica glass to which no dopant is added, and the cladding 32 may be made of silica glass to which a dopant having a low refractive index is added.

The coating layer 33 is made of a resin such as an ultraviolet curable resin.

The waveguide member 40 is a member that individually and optically couples the respective cores 31 of the single-core fibers 30a to 30d and the cores 11a to 11d of the transmission multicore fiber 10. In the present embodiment, the waveguide member 40 includes a multicore fiber 50 and a pitch conversion unit 60.

The multicore fiber 50 according to the present embodiment has the same configuration as the transmission multicore fiber 10, and includes four cores 11a to 11d, a cladding 12, and a coating layer 13. One end of the multicore fiber 50 is connected to one end of the transmission multicore fiber 10 so that the respective cores 11a to 11d of the multicore fiber 50 are individually and optically coupled to the cores 11a to 11d of the transmission multicore fiber 10.

The pitch conversion unit 60 of the present embodiment is a waveguide substrate having four waveguides 61a to 61d extending from one end to the other end. The arrangement of the waveguides 61a to 61d at one end of the pitch conversion unit 60 corresponds to the arrangement of the cores 11a to 11d of the multicore fiber 50. The other end of the multicore fiber 50 is connected to one end of the pitch conversion unit 60 so that the cores 11a to 11d of the multicore fiber 50 are individually coupled to one ends of the waveguides 61a to 61d. The waveguides 61a to 61d are linearly arranged in a line at the other end of the pitch conversion unit 60, and the distance between the waveguides 61a to 61d on the other end side is larger than the distance between the waveguides 61a to 61d on one end side. One end of the single-core fiber 30a is connected to the other end of the pitch conversion unit 60 so as to be coupled to the waveguide 61a coupled to the core 11a of the multicore fiber 50. One end of the single-core fiber 30b is connected to the other end of the pitch conversion unit 60 so as to be coupled to the waveguide 61b coupled to the core 11b of the multicore fiber 50. One end of the single-core fiber 30c is connected to the other end of the pitch conversion unit 60 so as to be coupled to the waveguide 61c coupled to the core 11c of the multicore fiber 50. One end of the single-core fiber 30d is connected to the other end of the pitch conversion unit 60 so as to be coupled to the waveguide 61d coupled to the core 11d of the multicore fiber 50. In this manner, the respective cores 31 of the single-core fibers 30a to 30d and the cores 11a to 11d of the transmission multicore fiber 10 are individually and optically coupled by the waveguide member 40.

Note that the waveguide member 40 is not limited as long as the respective cores 31 of the single-core fibers 30a to 30d and the cores 11a to 11d of the transmission multicore fiber 10 are individually optically coupled. For example, the waveguides 61a to 61d at the other end of the pitch conversion unit 60 may be arranged at predetermined intervals on a predetermined circumference. The waveguide member 40 may include only the pitch conversion unit 60, and the pitch conversion unit 60 may be a spatial optical system including a plurality of lenses. Further, the pitch conversion unit 60 may be formed integrally with the plurality of single-core fibers 30a to 30d. Such a pitch conversion unit 60 can be formed, for example, by extending an end portion of a fiber bundle in which a plurality of single-core fibers 30a to 30d is bundled.

FIG. 4 is a diagram illustrating optical characteristics of the optical communication apparatus 1 according to the present embodiment, and is a diagram illustrating waveforms measured by an OTDR 70 illustrated in FIG. 1. The incident position of the measurement light of the OTDR 70 is an end opposite to the waveguide member 40 side of each of the single-core fibers 30a to 30d in the FIFO 20. Further, the measurement light is light having a wavelength other than a communication wavelength band, and the wavelength of the measurement light is 1360 nm or more and less than 1460 nm, which is a so-called E band. Furthermore, the wavelength of the measurement light is shorter than the communication wavelength band, and in the present embodiment, the communication wavelength band is 1530 nm or more and less than 1565 nm, which is a so-called C band, and 1565 nm or more and less than 1625 nm, which is a so-called L band. In FIG. 4, a waveform WFa when the measurement light is incident on the single-core fiber 30a and a waveform WFb when the measurement light is incident on the single-core fiber 30b are arranged in a vertical direction.

As illustrated in FIG. 4, in the present embodiment, an inclination of the portion corresponding to the transmission multicore fiber 10 and the multicore fiber 50 in the waveform WFa is larger than an inclination of the portion corresponding to the transmission multicore fiber 10 and the multicore fiber 50 in the waveform WFb. That is, the propagation loss of the measurement light in the transmission multicore fiber 10 and the core 11a of the multicore fiber 50 is larger than the propagation loss in the transmission multicore fiber 10 and the core 11b of the multicore fiber 50. In a case where the wavelength of light propagating through the core is in the E-band, it is known that the loss of light due to the hydroxyl group contained in the core increases, and this is sometimes referred to as OH loss. In the present embodiment, due to the OH loss, the propagation loss of the measurement light in the transmission multicore fiber 10 and the core 11a of the multicore fiber 50 is larger than the propagation loss in the transmission multicore fiber 10 and the core 11b of the multicore fiber 50.

Note that, although not illustrated, a waveform when the measurement light is incident on the single-core fiber 30c and a waveform when the measurement light is incident on the single-core fiber 30d are substantially the same as the waveform WFb. Therefore, the propagation loss of the measurement light is different between the core 11a and the other cores 11b to 11d, and the propagation loss of the measurement light in the core 11a is larger than the propagation loss of the other cores 11b to 11d of the measurement light. Further, a waveform when light of the communication wavelength band is incident on each of the single-core fibers 30a to 30d is substantially the same as the waveform WFb. Therefore, a difference between the propagation loss of the measurement light in the core 11a and the propagation losses in the other cores 11b to 11d is larger than the difference between the propagation loss of the light having the wavelength of the communication wavelength band in the core 11a and the propagation losses in the other cores 11b to 11d.

As described above, in the transmission multicore fiber 10 as the multicore fiber of the present embodiment, the propagation loss of the measurement light having the wavelength other than the communication wavelength band is different between the core 11a and the other cores 11b to 11d. Thus, with the transmission multicore fiber 10 of the present embodiment, even if the variation in the propagation loss of the light having the wavelength of the communication wavelength band in the cores 11a to 11d is small, the core 11a can be easily identified by examining the propagation loss of each of the cores 11a to 11d using the above-described measurement light in order to examine the core 11a.

In the present embodiment, the difference between the propagation loss in the core 11a of the measurement light and the propagation loss in the other cores 11b to 11d is larger than the difference between the propagation loss in the core 11a of the light having the wavelength of the communication wavelength band and the propagation loss in the other cores 11b to 11d. Thus, according to the transmission multicore fiber 10 of the present embodiment, the core 11a can be more easily identified.

Note that the method of examining the propagation loss is not limited to measurement by the OTDR 70, and may be measurement by, for example, OFDR, OLTS, or the like. In the case of using the OTDR and the OFDR, the propagation loss can be examined only by causing light to enter from one end side of the transmission multicore fiber 10, so that measurement can be easily implemented. In addition, the cost can be reduced because no operator is required on the other end side of the transmission multicore fiber 10.

In the present embodiment, the wavelength of the measurement light is shorter than the communication wavelength band. As the wavelength of light propagating through the core is shorter, inter-core crosstalk of the light tends to be suppressed. Therefore, according to the transmission multicore fiber 10 of the present embodiment, it is possible to suppress the inter-core crosstalk of the measurement light propagating through the cores 11a to 11d when examining the propagation loss of each of the cores 11a to 11d using the measurement light as compared with the case where the communication wavelength band is the same and the wavelength of the measurement light is longer than the communication wavelength band. Thus, according to the transmission multicore fiber 10 of the present embodiment, the core 11a can be more easily identified.

In the present embodiment, the wavelength of the measurement light is a so-called E band, which is 1360 nm or more and less than 1460 nm. According to the present embodiment, as described above, by making the content of the hydroxyl group of the core 11a larger than the contents of the hydroxyl groups of the other cores 11b to 11d, the propagation loss of the measurement light in the core 11a can be made larger than the propagation loss in the other cores 11b to 11d. Therefore, the difference between the propagation loss in the core 11a of the measurement light and the propagation loss in the other cores 11b to 11d can be made larger than the difference between the propagation loss in the core 11a of the light having the wavelength of the communication wavelength band and the propagation loss in the other cores 11b to 11d. Further, the wavelength of light used in optical communication may be in the E-band, and there are existing OTDR, OFDR, OLTS, and the like using light in the wavelength band. Thus, according to the present embodiment, for example, the propagation loss can be measured even in the existing OTDR, OFDR, OLTS, and the like. Therefore, the core 11a can be easily identified.

Note that the difference between the propagation loss of the measurement light in the core 11a and the propagation loss in the other cores 11b to 11d is preferably 0.1 dB/km or more. With such a configuration, it is possible to measure a difference in a propagation loss even in a measurement device (for example, a general-purpose measuring device) in which the smallest measurable value of the propagation loss is large, and thus it is possible to easily identify the core 11a. Here, particularly in the case of a short multicore fiber, since the propagation loss is small, the error of the measured propagation loss may increase. However, with such a configuration, even in the case of the short transmission multicore fiber 10, an error can be suppressed and the core 11a can be easily identified. In addition, a difference in propagation loss between cores in a general multicore fiber tends to be less than 0.1 dB/km. A difference in propagation loss of the light between the other cores 11 to 11d is preferably less than 0.1 dB/km. Thus, with such a configuration, the core 11a can be easily identified. In addition, the difference between the typical value of the propagation loss of a general optical fiber and the upper limit of the value of the propagation loss of the optical fiber standard tends to be less than 0.1 dB/km. When the difference in the propagation loss is 0.1 dB/km or more, the difference in the propagation loss is one digit or more from the above difference value, which indicates that the difference in the propagation loss is high to the extent of deviating from the conformity standard of the optical fiber generally used for communication, so that the core 11a can be easily identified more reliably. Note that, from these viewpoints, the above difference is more preferably 0.5 dB/km or more, and still more preferably 1.0 dB/km or more. In addition, the difference between the propagation loss of the light having the wavelength of the communication wavelength band in the core 11a and the propagation loss in the other cores 11b to 11d is preferably less than 0.1 dB/km.

Although the present invention has been described by taking the above-described embodiment as an example, the present invention is not limited thereto. The propagation loss of the measurement light having a wavelength other than the communication wavelength band only needs to be different between the core 11a and the other cores 11b to 11d, and for example, the propagation loss of the measurement light in the core 11a may be smaller than the propagation loss of the measurement light in the other cores 11b to 11d.

Further, the communication wavelength band and the wavelength of the measurement light are not limited. For example, when the wavelength of light propagating through the core is 400 nm or more and less than 600 nm, the loss of light tends to increase depending on the contents of nickel, chromium, cobalt, iron, and copper in the core. When the wavelength of light propagating through the core is 600 nm or more and less than 800 nm, the loss of light tends to increase depending on the contents of nickel, chromium, cobalt, and iron in the core. When the wavelength of light propagating through the core is 800 nm or more and less than 900 nm, the loss of light tends to increase depending on the content of chromium in the core. When the wavelength of light propagating through the core is 900 nm or more and less than 1000 nm, the loss of light tends to increase depending on the contents of chromium and hydroxyl groups in the core. When the wavelength of light propagating through the core is 1000 nm or more and less than 1260 nm, which is a so-called T band, the loss of light tends to increase depending on the contents of nickel, cobalt, and hydroxyl groups in the core. When the wavelength of light propagating through the core is 1260 nm or more and less than 1360 nm, which is a so-called O band, the loss of light tends to increase depending on the contents of nickel and cobalt in the core. When the wavelength of light propagating through the core is in the E-band, the loss of light tends to increase depending on the contents of nickel, cobalt, and hydroxyl groups in the core. When the wavelength of light propagating through the core is 1460 nm or more and less than 1530 nm which is a so-called S band, when the wavelength is 1530 nm or more and less than 1565 nm which is a so-called C band, when the wavelength is 1565 nm or more and less than 1625 nm which is a so-called L band, and when the wavelength is 1625 nm or more and less than 1675 nm which is a so-called U band, the loss of light tends to increase depending on the contents of nickel and cobalt in the core. When the wavelength of light propagating through the core is 1675 nm or more, the loss of light tends to increase depending on the contents of hydroxyl group, cobalt, and nickel in the core. Thus, for example, the above configuration can be obtained by adjusting the contents of the substances in the core 11a of the transmission multicore fiber 10. For example, in order to make the difference between the propagation loss of light of the core 11a and the propagation loss of light of the other cores 11b to 11d larger than the difference between the light propagation losses of the other cores 11b to 11d, for example, the same dopant is added to the other cores 11b to 11d in substantially the same amount, and at least one of the type or amount of the dopant added to the core 11a is made different from the type or amount of the dopant added to the other cores 11b to 11d. Therefore, for example, the communication wavelength band may be at least one of the C band, the L band, the O band, or the S band, and the wavelength band other than the communication wavelength band may be at least one of the T band, the E band, the U band, an ultraviolet band having a wavelength of 10 nm or more and less than 360 nm, a visible light band having a wavelength of 360 nm or more and less than 830 nm, or a band excluding the C band, the L band, the O band, and the S band in the infrared region having a wavelength of 830 nm or more and 2.5 µm or less.

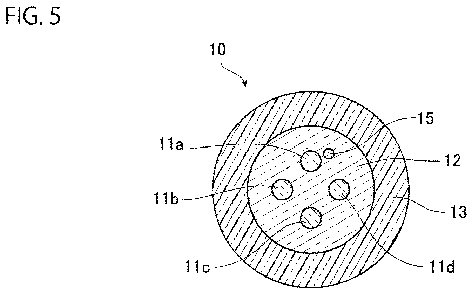

The transmission multicore fiber 10 may further include a member different from the cores 11a to 11d such as a marker, and such a modification will be described. FIG. 5 is a view illustrating a cross section perpendicular to a longitudinal direction of a transmission multicore fiber 10 according to a modification. The transmission multicore fiber 10 according to the modification illustrated in FIG. 5 includes a marker 15. The distance between the core 11a and the marker 15 is smaller than the distances between the other cores 11b to 11d and the marker 15. Thus, according to the present modification, light leaking from the core 11a of the multicore fiber 50, which is a part of the coupling waveguide 21a, is easily affected by the marker 15. Examples of the influence of the marker 15 on the light leaking from the core 11a include the influence of impurities added to the marker 15, the influence of unevenness of the interface between the marker 15 and the cladding 12, and the like. Examples of the impurities added to the marker 15 include dopants that increase the loss of moisture and the above-described light, and dopants such as germanium, iron, and boron. As a method of increasing the unevenness of the interface, for example, when a base material of the multicore fiber 50 is manufactured by a drilling method, the surface roughness of an outer peripheral surface of a marker rod to be the marker 15 and the surface roughness of a surface defining a hole into which the marker rod is inserted in a cladding rod to be the cladding 12 can be roughened. As the light leaking from the core 11a spreads to the marker 15, the loss of light increases due to the above influence. Thus, the loss of the measurement light propagating through the core 11a can be made larger than the loss of the measurement light propagating through the other cores 11b to 11d. Therefore, according to the present modification, for example, even if the materials constituting the cores 11a to 11d are the same, the propagation loss of the measurement light can be made different between the core 11a and the other cores 11b to 11d. In addition, the core 11a can be visually identified on the basis of the marker 15.

In addition, the wavelength of the measurement light may be equal to or less than a wavelength at which light in a mode having an order higher by one order than the mode of light having a wavelength of the communication wavelength band propagating through the cores 11a to 11d can propagate. In this case, the measurement light propagated through the cores 11a to 11d includes light of the same mode as the mode of the light having the wavelength of the communication wavelength band propagated through the cores 11a to 11d and light of a mode having a higher order than the mode of the light. Light of a higher mode tends to leak out from the core through which the light propagates, and is easily affected by a propagation loss factor located at the outer peripheral portion of the core or outside the core. Examples of the propagation loss factor include an element that easily absorbs the measurement light added to the outer peripheral portion of the core or the periphery of the core in the cladding, unevenness of the boundary between the core and the cladding, a marker located near the core, and the like. Examples of the influence of the marker include the influence of impurities added to the marker, the influence of unevenness on the interface between the marker and the cladding, and the like. When the light of the higher mode leaked out from the core spreads to these propagation loss factors, the loss of the light of the higher mode increases due to the influence of these propagation loss factors. Therefore, according to the above configuration, for example, by making the propagation loss in the core 11a of the light of the mode having a higher order than the mode of the light having the wavelength of the communication wavelength band larger than the propagation loss in the other cores 11b to 11d by these propagation loss factors, the propagation loss in the core 11a of the measurement light can be made larger than the propagation loss in the other cores 11b to 11d. Therefore, the difference between the propagation loss in the core 11a of the measurement light and the propagation loss in the other cores 11b to 11d can be made larger than the difference between the propagation loss in the core 11a of the light having the wavelength of the communication wavelength band and the propagation loss in the other cores 11b to 11d. In this case, the mode of the light having the wavelength of the communication wavelength band propagating through the cores 11a to 11d may be a single mode. Note that, in a case where the distance between the outer peripheral surface of the cladding and the core is small, the amount of light in the higher-order mode leaking increases, and the loss of light increases. Therefore, by adjusting the position of the core 11a, the propagation loss in the core 11a of the light of the mode having a higher order than the mode of the light having the wavelength of the communication wavelength band can be made larger than the propagation loss in the other cores 11b to 11d.

The wavelength of the measurement light may be 800 nm or more and 950 nm or less. The wavelength of light used in multi-mode fiber communication may be 800 nm or more and 950 nm or less, and there are existing OTDR and OLTS using light in the wavelength band. Thus, according to such a configuration, for example, the core 11a can be identified by measuring propagation loss by existing OTDR and OLTS.

The wavelength of the measurement light may be 1625 nm or more and less than 1675 nm, which is a so-called U band. The wavelength of light used in multi-mode fiber communication may be a U-band wavelength, and there are existing OTDR or OLTS using light in the wavelength band. Thus, with such a configuration, for example, the propagation loss can be measured even in an existing OTDR or OLTS. Therefore, the core 11a can be easily identified.

The wavelength of the measurement light may be 360 nm or more and less than 830 nm. Light having a wavelength of 360 nm or more and less than 830 nm is visible light, and the light appears dark as the energy decreases. Thus, with such a configuration, for example, the core 11a can be identified by visually checking the brightness of return light when the measurement light is caused to enter each of the cores 11a to 11d from one end side of the transmission multicore fiber 10. In addition, the core 11a can be identified without using a device for measuring a propagation loss.

As described above, according to the present invention, a multicore fiber in which a specific core can be easily identified even when a variation in propagation loss of light having a wavelength of a communication wavelength band in the core is small is provided, and it is expected to be used in the field of optical fiber communication and the like.

## Claims

1. A multicore fiber comprising:
a plurality of cores; and
a cladding surrounding each of the cores, wherein
a propagation loss of measurement light having a wavelength other than a communication wavelength band is different between a specific core of the cores and another core of the cores.

2. The multicore fiber according to claim 1,
wherein
a difference between a propagation loss of the measurement light in the specific core and a propagation loss of the measurement light in the another core is 0.1 dB/km or more.

3. The multicore fiber according to claim 1 or 2, wherein
a wavelength of the measurement light is 1360 nm or more and 1460 nm or less.

4. The multicore fiber according to any one of claims 1 to 3, wherein
a wavelength of the measurement light is shorter than the communication wavelength band.

5. The multicore fiber according to any one of claims 1 to 4, wherein
a difference between a propagation loss of the measurement light in the specific core and a propagation loss of the measurement light in the another core is larger than a difference between a propagation loss of light having a wavelength of the communication wavelength band in the specific core and a propagation loss of the light in the another core.

6. The multicore fiber according to any one of claims 1 to 5, wherein
a wavelength of the measurement light is equal to or less than a wavelength at which light in a mode having an order higher by one order than a mode of light having a wavelength of the communication wavelength band propagating through the core is able to propagate.

7. The multicore fiber according to any one of claims 1, 2, and 4 to 6, wherein
a wavelength of the measurement light is 800 nm or more and 950 nm or less.

8. The multicore fiber according to any one of claims 1, 2, and 4 to 6, wherein
a wavelength of the measurement light is 360 nm or more and less than 830 nm.

9. The multicore fiber according to any one of claims 1 to 8, comprising:
a marker having a distance from the specific core smaller than a distance from the another core.
